Europäisches Patentamt

**European Patent Office**

**Office européen des brevets**

(11) Publication number: **0 125 061**

**A1**

# EUROPEAN PATENT APPLICATION

(21) Application number: **84302712.9**

(22) Date of filing: **19.04.84**

(51) Int. Cl.³: **G 01 K 11/24**
**G 01 P 5/00**

(30) Priority: **04.05.83 GB 8312142**

(43) Date of publication of application:
**14.11.84 Bulletin 84/46**

(84) Designated Contracting States:
**DE FR**

(71) Applicant: **CENTRAL ELECTRICITY GENERATING BOARD**
**Sudbury House 15, Newgate Street**
**London EC1A 7AU(GB)**

(72) Inventor: **Green, Stephen Francis**
**Dock Cottage Dock Lane**
**Beaulieu Hampshire SO4 7YH(GB)**

(74) Representative: **Cross, Rupert Edward Blount et al,**
**BOULT, WADE & TENNANT 27 Furnival Street**
**London EC4A 1PQ(GB)**

(54) Fluid temperature and velocity measuring arrangement.

(57) At least two acoustic transmitters (5) in the form of spark discharge acoustic generators arranged to each transmit an acoustic pulse along at least two discrete paths through a fluid in an enclosure to acoustic receivers (6) in the form of microphones. The transmitters and receivers are arranged to have a known spatial relationship to each other.

The travel time of the pulse along each path can be evaluated and stored in a timing results store (13).

A means to calculate (14, 17) calculates from the stored travel times and the known relationships stored in a data store (15) values of fluid temperature along said paths. Thus, an averaged representation of the temperature of the fluid in the enclosure can be evaluated.

The measuring apparatus can be used in a duct carrying a flowing fluid when at least three transmitters are employed, wherein a receiver is provided immediately adjacent each transmitter. In this way the travel time of the pulse along each path can be evaluated for both possible directions of travel and the means to calculate is adapted to calculate from the travel times and the known spatial relationship values of fluid temperature and fluid velocity for said paths.

The description also discloses calculation means for calculating the velocity distribution and temperature distribution across the duct.

FIG. 2.

## FLUID TEMPERATURE AND VELOCITY
## MEASURING ARRANGEMENT

This invention relates to the measurement of fluid temperature in an enclosure, and more particularly to the measurement of temperature and velocity of a fluid flowing in a duct.

During industrial processes it can sometimes be advantageous to have knowledge of the temperature of a fluid employed in the process. In addition, knowledge of the fluid flow velocity can be advantageous. For example, it is necessary to monitor flue gas temperature and velocity emerging from an electricity generator furnace in order to check burning rates.

Known forms of temperature measuring devices, as disclosed in UK 1505494, employ a single sound transmitter and receiver mounted opposite one another in a duct wall. By measurement of the flight time of sound through the gas across the gap between the transmitter and receiver, it is possible to calculate the gas temperature. Nevertheless the device has a limited accuracy due to fluid turbulence effects in the gap and is additionally unable to measure the gas velocity.

It is an object of the invention to provide a measuring apparatus capable of increased accuracy of temperature and measurement of a fluid in an enclosure by reducing the effects on results arising from fluid turbulence in the enclosure.

It is also an object of the invention to provide a measuring apparatus capable of measuring temperature and velocity of a fluid flowing in a duct.

According to the invention there is provided a measuring apparatus capable of measuring the temperature of fluid in an enclosure comprising at least two acoustic transmitters arranged to each transmit an acoustic pulse along at least two discrete paths to acoustic receivers, the transmitters and receivers having a known special relationship to each other; means to activate each transmitter separately; means to monitor said transmission and receipt of the pulse at each receiver in order to evaluate the travel time of the pulse along each path; and means to calculate, from said travel times and said known relationships, values of fluid temperature along said paths. In this way at least two travel times of the acoustic pulse across the enclosure are measured, thereby obtaining an averaged representation of the temperature of the fluid in the enclosure. The apparatus can be used in a duct carrying a flowing fluid wherein the transmitters and receivers are provided around a plane substantially perpendicular to the mean fluid flow direction.

Preferably the measuring arrangement when used in a duct carrying a flowing fluid includes at least three transmitters and wherein a receiver is provided immediately adjacent each transmitter so that travel time of the pulse along each said path can be evaluated for both possible directions of travel, and said means to calculate is adapted to calculate, from the travel times and the known special relationship between transmitters and receivers, values of fluid temperature and fluid velocity for said paths. Consequently it is possible to obtain an averaged value representative of the fluid velocity flow in the duct. The measuring arrangement can also include at least four transmitters wherein two of said at least four transmitters are provided around a first plane substantially perpendicular to the mean fluid flow direction and two of said at least four transmitters are provided around a second plane substantially perpendicular to the mean fluid flow direction. In this way it is possible to obtain an averaged value representative of the fluid temperature in the first and second planes, and an averaged value representative of the fluid velocity flow in the duct between the first and second planes.

The acoustic transmitters can include spark discharge acoustic generators and the receivers can comprise microphones. In cases where the fluid is significantly hotter than the working temperature of the transmitters and receivers, then the transmitters and receivers can include thermal insulation from the fluid. The values of temperature and velocity which are calculated can be illustrated on a display means and the values of temperature and velocity can be evaluated to produce a temperature and velocity distribution. These distributions can also be illustrated on a display means. The known spatial relationships between the transmitters and receivers can be stored in a store means which is accessed by the means to calculate.

Examples of the present invention are illustrated with reference to the accompanying drawings, in which:-

Figure 1 illustrates a perspective view of an array of sound transmitters and receivers located around a gas duct;

Figure 2 illustrates control and calculation circuitry for the sound transmitters and receivers shown in Figure 1;

Figure 3 illustrates a receiver located in a duct wall mounting for a sound transmitter and receiver;

Figure 4 illustrates a block diagram of a transmitter which can be mounted in the mounting shown in Figure 3.

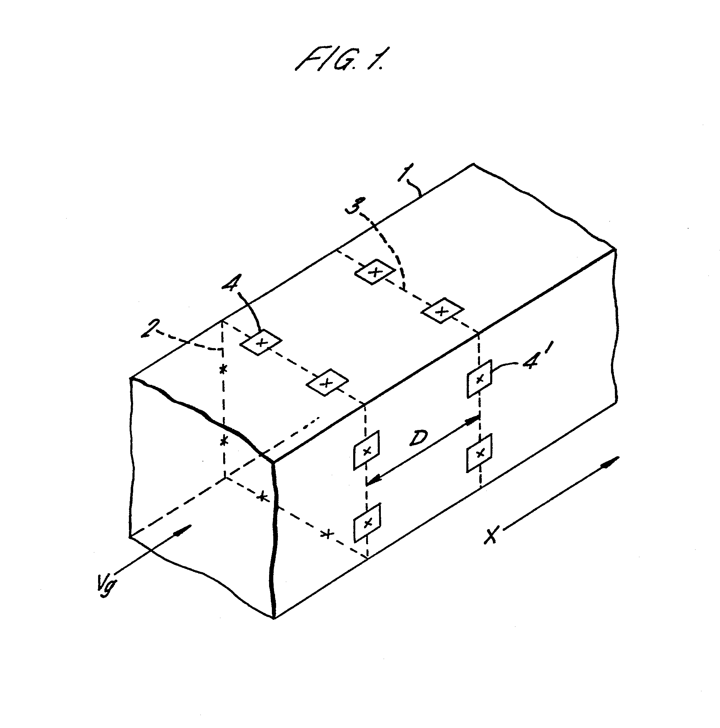

Referring to Figure 1, a gas duct 1 carries hot furnace gas in a mean direction X with a velocity $V_g$ and temperature $T_g$. Around the periphery of the duct in a first plane 2 perpendicular to the duct longitudinal axis and direction X there are located combined units 4 of receivers 5 and transmitters 6. Around a second such plane 3 displaced from the first plane by a distance D, there are provided further combined units 4' of receivers 5' and transmitters 6'.

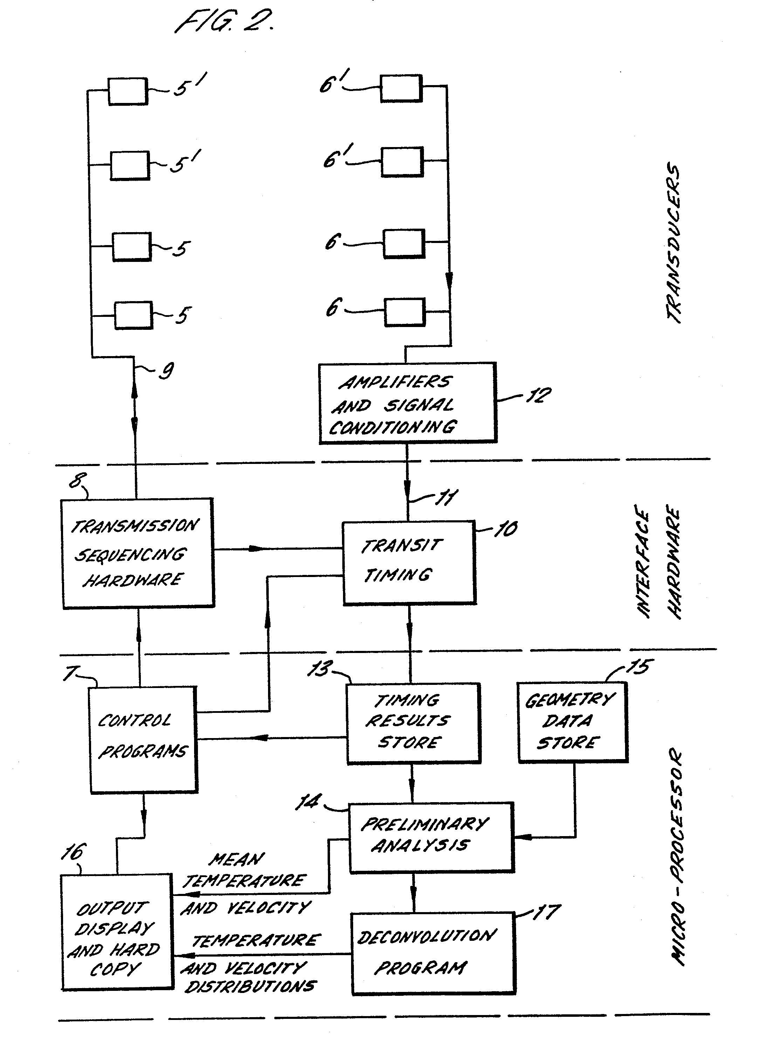

Control and calculation circuitry of the measuring arrangement in accordance with the invention is shown in Figure 2, although not all receivers and transmitters are illustrated for the purposes of clarity. A central control unit 7 initiates in a random and discrete way the activation, from a generating unit 8, of each transmitter 5. The unit 8 is connected by a bus 9 to each transmitter.

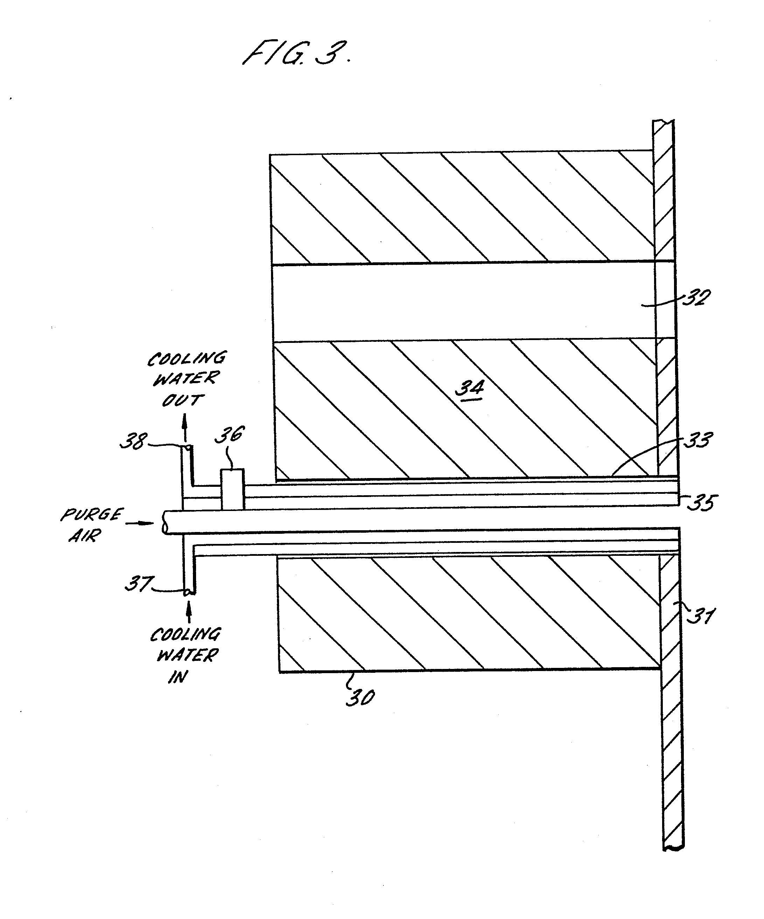

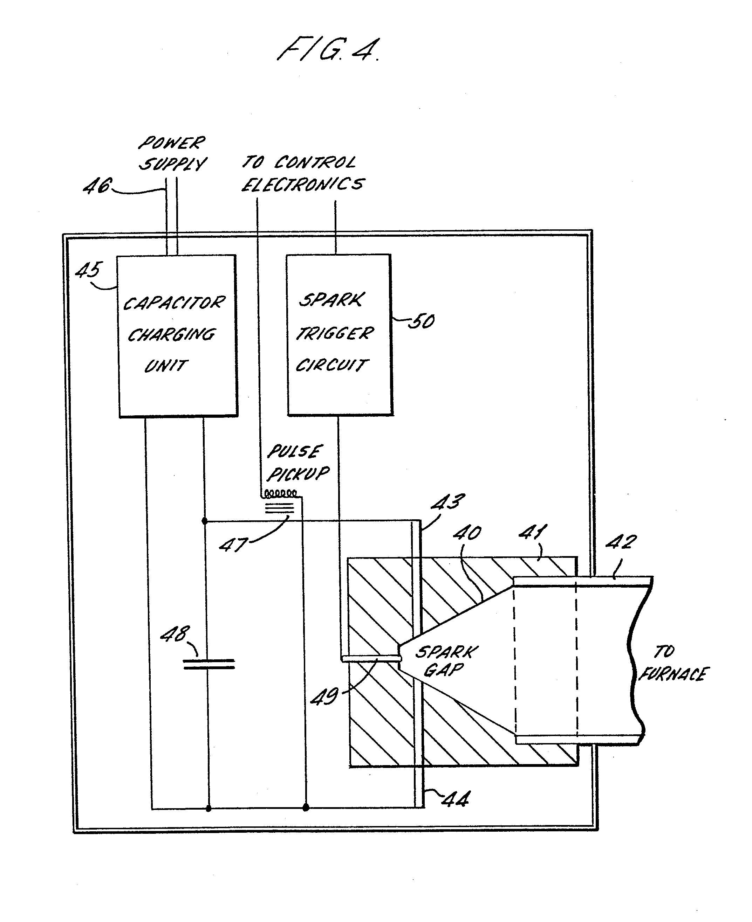

The transmitter and its associated circuitry is shown in Figure 4 and includes a spark discharge acoustic generator. A horn 40, mounted in electrical insulation 41, is connected to a pipe 42 for mounting in a duct wall mounting box 30 shown in Figure 3. Immediately adjacent the apex of the horn a pair of spark electrodes 43, 44 are provided facing one another. Electrode 44 is connected to a loud potential terminal of a charging unit 45 powered by leads 46 connected to a power supply (not shown). Electrode 43 is connected, via a pick up coil 47, to the high potential terminal of the unit 45. A rapid discharge capacitor 48 is connected across the high and low potential terminals of the charging unit 45.

When a high potential exists between the spark electrodes 43 and 44 a spark can be initiated by a trigger electrode 49. The trigger electrode is disposed between the spark electrodes in a way such that when a potential is applied to the trigger electrode from a trigger circuit 50, the resultant distortion of the electric field between the spark electrodes produces electrical breakdown, discharge of capacitor 48 and consequent spark. The trigger circuit is connected by means of the bus 9 to the generating unit 8. The spark produced has a short duration of less than 10 microseconds and the resultant sound wave is emitted down tube 42. The spark electrodes have a predetermined positioning relative to one another and are located close to the apex of the horn in order to produce an optimum acoustic pulse for receipt at a receiver.

When a transmitter in plane 2 is activated to produce an acoustic pulse, the spark discharge is detected in the coil 47 and a return pulse from the transmitter is relayed by the unit 8 to a timing arrangement 10. The timing arrangement comprises a series of clocks connected by means of bus 11 to respective receivers in plane 2 and which clocks are all started by the return pulse. Amplifying and signal processing means 12 are provided between each clock and the receivers in order to shape the pulse produced in the receiver when an acoustic pulse is received therein. The receiver pulse is relayed to the timing arrangement and the pulse is shaped by the means 12 to a suitable form so that it stops the clock to which it is connected.

Before each transmission occurs the control unit 7 reads out to a store means 13 the times contained in each clock in the timing arrangement and then resets the clocks to zero. Therefore when a transmitter is activated to produce an acoustic pulse the return pulse via unit 8 starts all the clocks in the timing arrangement and receipt of the acoustic pulse in a receiver produces a pulse which is shaped by the means 12 before being relayed to the timing arrangement to stop the clock to which it is connected. Therefore the contents of the array of clocks in arrangement 10 contain a measurement of the travel time of the acoustic pulse along paths from one transmitter to each receiver in the plane 2.

Consequently at one time or another each transmitter 5 is activated and the travel time of the acoustic pulse from the transmitter to each receiver 6 is measured, stored in store means 13 and subsequently read out for processing. The read out contents of the store means are mixed in an analyser 14, with geometry data and all required information which is contained in a store 15. The geometry data comprise information regarding the relative spatial geometry of the receivers and transmitters, this effectively being the travel path length of acoustic pulses and their relative angular relationship to one another. Consequently the analyser can evaluate the velocity of sound transmitted across the duct and evaluate a mean velocity from the number of velocity measurements made. By employing the relation $C = KT^{\frac{1}{2}}$ for a known gas temperature and known sound velocity a value of the temperature along a path in plane 2 can be evaluated. These values of temperature can then be evaluated to produce a temperature in plane 2 which is a simple arithmetic mean or a weighted mean in accordance with the distance travelled.

The transmitters and receivers in the measuring arrangement described hereinabove are arranged in a plane substantially perpendicular to the mean direction of fluid flow in a duct. In this way the velocity of the acoustic pulse is substantially unaffected by the velocity of the fluid flowing in the duct. It will be apparent that the transmitters and receivers need not be located adjacent one another and that in an enclosure wherein fluid flow is substantially negligable the arrangement of transmitters and receivers need not be in a plane. Consequently the measuring apparatus in accordance with the invention is capable of measuring the temperature of a fluid in an enclosure. By using an arrangement as described hereinabove the mean temperature can be evaluated to an accuracy of 0.5% when a total of 8 transmitter receiver positions are used. Clearly the calculations and results from the analyser 14 can be displayed or produced as hard copy on an output means 16, for example, a cathode ray tube.

A further set of transmitters 5' and receivers 6' are provided in plane 3. The array of clocks in arrangement 10 are now connected to respective receivers 6 and 6'. The control unit 7 initiates separate activation of the transmitters 5 and 5' and the receivers 6 and 6' receive the acoustic pulses from the transmitters. The clock results are read out as described hereinabove and separated in analyser 14 into travel times along one path for both possible directions of travel of the acoustic pulse. By subtraction from one another of the travel times of the acoustic pulse in each direction a value is obtained bearing a direct relationship to the velocity of flow of the gas in the duct. By adding together the travel times of the acoustic pulse in each direction a value is obtained bearing a relationship to the velocity of sound along the path. This value of velocity of sound is proportional to the square root of the temperature of the gas, as described hereinabove. By suitable analysis of the travel times and the angular relationship of the paths of the acoustic pulses with respect to direction X, which relationships are stored in store 15, values of gas velocity can be calculated and values of gas temperature can be calculated. These values can be evaluated to produce a mean gas velocity and temperature between planes 2 and 3 which is either a simple arithmetic mean or a mean weighted in accordance with the path length travelled.

In this way the measuring arrangement can evaluate both gas velocity and gas temperature within the duct. It will be apparent that it is not essential that the transmitter and receiver pairs are contained in respective planes, this merely provides a more precise definition of location of the gas temperature and velocity measured.

Both the temperature and velocity distribution of the fluid can be described by Fourier series with a limited number of terms. In order to evaluate the temperature distribution, the coefficients of the terms can be determined provided sufficient measurements along different paths of acoustic pulses are taken to form a consistent set of equations. A deconvolution means 17 receives values of fluid temperature from the analyser 14 in the form of calculated coefficients of the temperature Fourier series and deconvolutes it into a temperature distribution. This temperature distribution may be either two or three-dimensional. The distribution can then be displayed by the display means 16.

When the transmitters and receivers are arranged spatially in pairs or when both planes 2 and 3 include transmitters and receivers as described hereinabove the deconvolution means 17 receives calculated coefficients of the velocity Fourier series and demodulates it into a velocity distribution between planes 2 and 3. This distribution can also be displayed by the display means.

When the measuring arrangement is used for a duct carrying hot gases the receivers and transmitters are located in pairs as shown in Figure 3 which may lie in a common plane. A box 30 attached to a duct wall 31 contains heat insulating material 34 pierced by two tubular apertures 32 and 33. Aperture 32 receives the pipe 42 of the transmitter (not shown) and apertures 33 receives a hollow sheathed microphone tube 35 having water cooling inlet and outlet 37 and 38 respectively. The microphone tube 35 has a microphone 36 mounted where the tube extends from the box, exterior to the

0125061

duct. Air is pumped into the hollow tube to produce a small air flow into the duct so that the temperature relationship along the tube is substantially constant for all measurements and in addition hot gas is kept out of contact with the microphone.

Therefore the measuring arrangement in accordance with the invention allows temperature of a fluid in an enclosure to be measured by providing at least two discrete paths between at least two acoustic transmitters and receivers. In order to evaluate any velocity of the fluid at least three transmitters are required and a receiver is provided immediately adjacent each transmitter so that travel time of the acoustic pulse along each said path can be evaluated for both possible directions of travel.

It will be apparent that in this context duct includes all manner of enclosures carrying fluids which can be flowing, for example pipes, air conduits or tubes.

CLAIMS

1. Measuring apparatus capable of measuring the temperature of fluid in an enclosure comprising at least two acoustic transmitters arranged to each transmit an acoustic pulse along at least two discrete paths to acoustic receivers, the transmitters and receivers having a known spacial relationship to each other; means to activate each transmitter separately; means to monitor said transmission and receipt of the pulse at each receiver in order to evaluate the travel time of the pulse along each path; and means to calculate, from said travel times and said known relationships, values of fluid temperature along said paths.

2. Measuring apparatus as claimed in claim 1 for use in a duct carrying a flowing fluid wherein the transmitters and receivers are provided around a plane substantially perpendicular to the direction of mean fluid flow.

3. Measuring apparatus as claimed in claim 1 for use in a duct carrying a flowing fluid including at least three transmitters and wherein a receiver is provided immediately adjacent each receiver so that travel time of the pulse along each said path can be evaluated for both possible directions of travel, and said means to calculate is adapted to calculate, from said travel times and the known spacial relationships between the transmitters and receivers, values of fluid temperature and fluid velocity along said paths.

4. Measuring apparatus as claimed in claim 3 including at least four transmitters wherein two of said at least four transmitters are provided around a first plane substantially perpendicular to the mean direction of fluid flow and two of said at least four transmitters are provided around a second plane substantially perpendicular to the mean direction of fluid flow.

5. Measuring apparatus as claimed in any preceding claim wherein the acoustic transmitters includes spark discharge acoustic generators.

6. Measuring apparatus as claimed in any preceding claim wherein the receivers comprise microphones.

7. Measuring apparatus as claimed in any preceding claim wherein the transmitters and receivers include thermal insulation from the fluid.

8, Measuring apparatus as claimed in any preceding claim including means to display the values evaluated.

9, Measuring apparatus as claimed in any preceding claim wherein said known relationships are stored in a store means accessed by the means to calculate.

10. Measuring apparatus as claimed in any one of claims 3 to 9 including means to evaluate a velocity distribution across the duct from said values of fluid velocity, wherein the means to evaluate the velocity distribution comprises calculation means to calculate, according to values of said travel times, coefficients of a Fourier series representing the velocity distribution and means to deconvolute said Fourier series into said velocity distribution.

11. Measuring apparatus as claimed in any preceding claim including means to evaluate the temperature distribution from said values of fluid temperature, wherein the means to evaluate the temperature distribution comprises calculation means to calculate, according to values of said travel times, coefficients of a Fourier series representing the temperature distribution and means to deconvolute said last-mentioned Fourer series into said temperature distribution.

- 16 -

0125061

12. Measuring apparatus as claimed in claim 10 or 11 including means to display said distribution.

FIG. 1.

FIG. 2.

TRANSDUCERS

5'
5'
5
5

6'
6'
6
6

9

AMPLIFIERS AND SIGNAL CONDITIONING — 12

INTERFACE HARDWARE

8 — TRANSMISSION SEQUENCING HARDWARE

11

TRANSIT TIMING — 10

MICRO-PROCESSOR

7 — CONTROL PROGRAMS

13 — TIMING RESULTS STORE

15 — GEOMETRY DATA STORE

14 — PRELIMINARY ANALYSIS

16 — OUTPUT DISPLAY AND HARD COPY

MEAN TEMPERATURE AND VELOCITY

TEMPERATURE AND VELOCITY DISTRIBUTIONS

17 — DECONVOLUTION PROGRAM

FIG. 3.

COOLING
WATER
OUT

38

36

PURGE
AIR

37

COOLING
WATER
IN

32

34

33

35

31

30

## FIG. 4.

POWER SUPPLY

TO CONTROL ELECTRONICS

46

45

CAPACITOR CHARGING UNIT

SPARK TRIGGER CIRCUIT

50

PULSE PICKUP

47

43

40

41

42

48

SPARK GAP

TO FURNACE

49

44

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 162 630 (JOHNSON)<br><br>* Figures 1-4,6,7; column 2, line 6 - column 6, line 60; column 7, line 61 - column 10, line 50; column 11, line 45 - column 12, line 2 * | 1-4,8,9 | G 01 K 11/24<br>G 01 P 5/00 |
| A | | 10-12 | |
| A | DE-A-3 223 107 (ROSEN)<br>* Figure 3; page 7, lines 26-28 * | 3 | |
| A | EP-A-0 028 540 (THE ELECTRICITY COUNCIL)<br>* Figure 1; page 6, line 20 - page 7, line 25 * | 5,6 | |
| | | | TECHNICAL FIELDS SEARCHED (Int. Cl. 3) |
| A | US-A-4 374 477 (KIKUCHI et al.)<br>* Figures 4,5; column 3, lines 26-31 * | 7 | G 01 K 11/00<br>G 01 F 1/00<br>G 01 P 5/00<br>G 01 K 17/00 |
| D,A | GB-A-1 505 494 (ACOUSTIC TECHNOLOGY LTD.)<br>* Figure 1; page 1, lines 14-92 * | 1 | |

The present search report has been drawn up for all claims

| Place of search | Date of completion of the search | Examiner |
|---|---|---|
| THE HAGUE | 08-08-1984 | DRYSDALE N. |